Europäisches Patentamt

European Patent Office

Office européen des brevets

(19)

(11) Numéro de publication : **0 118 059**
**B1**

(12)                    **FASCICULE DE BREVET EUROPÉEN**

(45) Date de publication du fascicule du brevet :
21.01.87

(51) Int. Cl.⁴ : **B 60 C 11/00**

(21) Numéro de dépôt : **84101450.9**

(22) Date de dépôt : **13.02.84**

(54) **Réduction du bruit de roulage des enveloppes de pneumatique.**

(30) Priorité : 03.03.83 FR 8303662

(43) Date de publication de la demande :
12.09.84 Bulletin 84/37

(45) Mention de la délivrance du brevet :
21.01.87 Bulletin 87/04

(84) Etats contractants désignés :
AT BE CH DE GB IT LI LU NL SE

(56) Documents cités :
EP-A- 0 050 197
FR-A- 2 205 423
FR-A- 2 416 803
US-A- 3 926 238
US-A- 3 989 780
US-A- 4 178 199

(73) Titulaire : **MICHELIN & CIE (Compagnie Générale des Etablissements Michelin) Société dite:**
**4 rue du Terrail**
**F-63000 Clermont-Ferrand (FR)**

(72) Inventeur : **Campos, Francis**
**Impasse du Puyou Pavillon No. 22**
**F-63100 Clermont-Ferrand (FR)**
Inventeur : **Herbelleau, Yves**
**26, rue Amiral Gourbeyre**
**F-63200 Riom (FR)**

(74) Mandataire : **Hiebel, Robert et al**
**MICHELIN & CIE - Service K. Brevets**
**F-63040 Clermont-Ferrand Cedex (FR)**

Jouve, 18, rue St-Denis, 75001 Paris, France

0 118 059

**Description**

La présente invention concerne des enveloppes de pneumatiques ayant un dessin de bande de roulement approprié permettant de réduire le bruit émis lorsqu'elles roulent sur une surface et un procédé de réalisation du dessin de la bande de roulement de ces enveloppes de pneumatiques.

Il est bien connu que lorsqu'une enveloppe de pneumatique roule sur une surface, les éléments porteurs de charge qui constituent la bande de roulement sont à l'origine de divers mouvements créant un son audible qui se transforme généralement en un bruit de roulage désagréable pour le conducteur du véhicule. Il est également connu que pour améliorer les performances de tenue de route d'une enveloppe de pneumatique sur sol mouillé et éviter le phénomène d'hydroplanage, il est souhaitable que la bande de roulement comporte de nombreuses rainures d'orientation générale sensiblement transversale ou radiale. Cependant, cette solution qui assure une excellente évacuation de l'eau sous la bande de roulement est très pénalisante au niveau du bruit de roulage émis par l'enveloppe de pneumatique lorsqu'elle roule.

De nombreux efforts ont été déployés pour réduire le bruit de roulage émis par une enveloppe de pneumatique se déplaçant sur une surface. Ainsi, dans l'industrie du pneumatique, on utilise largement et depuis fort longtemps la technique consistant à moduler le bruit de roulage produit par l'enveloppe de pneumatique en rotation en faisant varier la longueur du cycle de dessin de la bande de roulement d'une enveloppe de pneumatique sur la circonférence de celle-ci. Cette technique est connue sous le nom de « pas variable ». On utilise également cette technique en arrangeant les cycles de dessin de pas variable soit selon une répartition statistique ou sinusoïdale sur la circonférence de l'enveloppe de pneumatique, soit selon des relations algébriques ou trigonométriques présélectionnées afin de réduire l'amplitude de certaines fréquences critiques émises par l'enveloppe de pneumatique en roulage et de les étaler sur une plus large bande de fréquences. Ces techniques sont décrites, par exemple, dans la publication SAE N° 690 520 sous le titre « Quieting Noise Mathematically — Its Application to Snow Tires », dans le brevet français n° 2 416 803 et dans les brevets US 2 006 197, 3 926 238 et 3 989 780.

Le but de la présente invention est de réduire le bruit de roulage émis par une enveloppe de pneumatique lorsqu'elle roule sur une surface par l'utilisation d'un procédé permettant de répartir de manière optimale l'énergie acoustique produite par l'enveloppe de pneumatique en rotation sur une large bande de fréquences le plus uniformément possible, chaque fréquence ayant une énergie plus faible.

Pour des conditions de réalisation pratique des moules, il est souhaitable d'utiliser un nombre entier de cycles de dessin sur la circonférence de la bande de roulement d'une enveloppe de pneumatique. Par cycle de dessin on entend toute portion de la bande de roulement qui comporte dans le sens circonférentiel un élément porteur de charge et une rainure d'orientation générale transversale adjacente à cet élément de charge. Cependant, il n'est pas indispensable que les limites circonférentielles de cette portion de bande de roulement passent par les bords circonférentiels des deux éléments porteurs de charge adjacents. Dès l'instant où la portion s'étend sur une distance équivalente à la somme des distances mesurées dans le sens circonférentiel d'un élément porteur de charge et d'une rainure d'orientation générale transversale, la délimitation du cycle de dessin peut passer en tout point de deux éléments porteurs de charge adjacents. Par rainure d'orientation générale transversale on entend toute rainure qui possède un angle moyen de 25° à 90° par rapport à la direction circonférentielle de l'enveloppe de pneumatique. Si l'on prend une bande de roulement d'enveloppe de pneumatique constituée d'un nombre total N de cycles de dessin répétitifs se répartissant en un nombre m de cycles de dessin de longueurs $\alpha$ différentes classées par ordre de taille croissante $\alpha_1 < \alpha_2... < \alpha_i... < \alpha_p$ dont les nombres respectifs sont $N_1$, $N_2$, $N_i$, $N_p$, dans le cadre de la demande conforme à l'invention on considère que ces cycles de dessin peuvent être répartis en deux catégories : les cycles de dessin principaux d'une part et les cycles de dessin de bouclage d'autre part. Les cycles de dessin de bouclage sont ceux dont le nombre total $N^*_i$ de cycles de dessin $\alpha_i$ de même taille satisfait à la double relation (A) :

$$N_i^* \leqslant 3 \qquad \text{et} \qquad N_i^* \leqslant \frac{2\,N \cdot \lambda_1^2}{n(\lambda_1^2 + \lambda_1 + 1)}$$

où :

N représente le nombre total de cycles de dessin présents sur la circonférence de l'enveloppe de pneumatique,

n est un nombre entier qui indique le nombre de cycles de dessin principaux de pas différents, c'est-à-dire le nombre des cycles de dessin répétitifs de pas différents dont le nombre total $N_i$ pour chacun des cycles de dessin de rang i considéré est supérieur à 3, et désigne également le cycle de dessin principal ayant le pas maximum,

$\lambda_1$ représente le rapport de pas entre le pas du cycle de dessin le plus petit et le pas du cycle de dessin le plus grand dont le nombre total, $N_i$ et $N_n$, est pour chacun supérieur à 3.

Les cycles de dessin principaux sont tous les autres cycles de dessin répétitifs qui ne satisfont pas à la double relation (A). Ces n cycles de dessin principaux sont classés par ordre de taille croissante : $a_1 < a_2 < ... a_i < a_n$, $N_1$, $N_2$, ... $N_i$ ... $N_n$ étant les nombres respectifs de cycles de dessin principaux de

2

même pas. Les cycles de dessin de bouclage sont également classés par ordre de taille croissante $a*_1 < a*_2 < ... < a*_j... <a*_m$, $N*_1$, $N*_2$, ...$N*_j$, $N*_m$ étant les nombres respectifs de cycles de dessin de bouclage de même pas et m indiquant le nombre de cycles de dessin de bouclage de pas différents.

L'invention a pour objet une enveloppe de pneumatique dont la bande de roulement est constituée par des éléments de support de charge répartis sur la circonférence de l'enveloppe de pneumatique selon une pluralité de n cycles de dessin répétitifs de pas variables, le nombre de chacun des cycles de dessin présents sur la bande de roulement satisfaisant à une première relation (C) :

$$\sum_{i=1}^{i=n} N_i \, a_i = 2\,\pi R \,,$$

n représentant un nombre entier égal ou supérieur à 3, et de préférence compris entre 4 et 7, indiquant le nombre de cycles de dessin principaux de pas différents constituant la bande de roulement de l'enveloppe de pneumatique et désigne le cycle de dessin principal ayant le pas maximum,

i représentant l'un quelconque, le i eme des cycles de dessin principal de rang i autre que celui de pas maximum,

R représentant le rayon de l'enveloppe de pneumatique mesuré à la périphérie de la bande de roulement,

$a_i$ représentant la longueur du cycle de dessin principal de rang i considéré des cycles de dessin principaux de pas différents, et

$N_i$ représentant pour chacun des cycles de dessin principaux de rang i ayant un pas inférieur au pas du cycle de dessin principal de pas maximum le nombre total de cycles de dessin principaux de rang i. Une telle enveloppe est connue du US-A-4 178 199. L'invention est caractérisée en ce que le nombre de chacun des cycles de dessin principaux de pas différents satisfait à l'ensemble des N — 1 deuxièmes relations générales (B) :

$$\frac{1}{(\lambda_i)^{1,5}} \leqslant \frac{N_i}{N_n} \leqslant \frac{1}{(\lambda_i)^3} \,;$$

$\lambda_i$ représentant le rapport de pas de la longueur de chacun des cycles de dessin principaux de rang i considéré sur la longueur du cycle de dessin principal de pas maximum,

$N_n$ représentant le nombre total de cycles de dessin principaux de pas maximum,

et en ce que — dans le cas d'un arrangement additionnel des cycles de dessin de bouclage — ladite première relation (C) s'énonce :

$$\sum_{i=1}^{i=n} N_i \, a_i + \sum_{j=1}^{j=m} N_j^* \, a_j^* = 2\,\pi R \pm \varepsilon$$

étant entendu que $\varepsilon$ peut être égal à 0,

m représentant le nombre de cycles de dessin de bouclage de pas différents présents sur la bande de roulement de l'enveloppe de pneumatique qui peut être soit 0, soit un nombre entier et désigne le cycle de dessin de bouclage ayant le pas maximum,

j représentant l'un quelconque, le $j^{ème}$ des cycles de dessin de bouclage de rang j,

$\varepsilon$ représentant la tolérance de réalisation des cycles de dessin sur la circonférence de l'enveloppe de pneumatique,

$a^*_j$ représentant la longueur du cycle de dessin de bouclage de rang j considéré des cycles de dessin de bouclage de pas différents,

$N^*_j$ représentant le nombre total des cycles de dessin de bouclage de chacun des cycles de rang j considéré.

Selon une variante d'exécution, le nombre de cycles de dessin principaux n étant égal ou supérieur à 4, le nombre de chacun des cycles de dessin principaux de pas différents satisfait seulement à n — 2 relations de l'équation (B) parmi les n — 1 relations ou encore lorsqu'il n'y a pas de cycles de dessin de bouclage présents.

L'invention a également pour objet un procédé permettant de répartir le plus uniformément possible le bruit de roulage émis par une enveloppe de pneumatique, lorsqu'elle roule sur une surface, sur une large bande de fréquences, chaque fréquence ayant une énergie plus faible.

Dans l'art antérieur, il était admis que le signal émis par chaque cycle de dessin est indépendant de la longueur, c'est-à-dire du pas du cycle de dessin et peut être assimilé à une impulsion élémentaire, les différences de pas n'intervenant que pour les possibilités de décalage relatives des cycles de dessin entre eux.

Les travaux de la demanderesse ont montré que, contrairement à ce qui était admis auparavant, le signal, déduit de mesures, émis par un cycle de dessin est très complexe et comporte de nombreux harmoniques dont l'amplitude varie avec la longueur du cycle de dessin. En d'autres termes, la demanderesse a découvert, pour répartir de façon optimale le bruit de roulage émis par une enveloppe de pneumatique lorsqu'elle se déplace sur une surface, sur une large bande de fréquences ayant chacune une énergie plus faible et étant réparties le plus uniformément possible sur la bande de fréquences, qu'il est indispensable d'utiliser un nombre de cycles de dessin de rang i de pas différents d'autant plus élevé que le rapport de pas $\lambda_i$ du pas du cycle de dessin principal de rang i sur le pas du cycle de dessin principal de pas maximum est petit, en privilégiant le nombre de cycles de dessin principaux de petit pas par rapport au nombre de cycles de dessin principaux de grand pas.

Ainsi, si l'on a une bande de roulement comportant exclusivement des cycles de dessin principaux et si l'on a n cycles de dessin principaux répétitifs, il en résulte que si les longueurs $a_i$ sont telles que $a_1 < a_2 < ... < a_n$, alors on a $\lambda_1 < \lambda_2 < ... < \lambda_n$. Dans ce cas, on choisit les longueurs $a_i$ de chaque cycle de dessin principal répétitif de rang i selon la relation (D) :

$$\frac{1}{1 - \dfrac{1 - \lambda_1}{n - 1}(i - 1,1)} \leqslant \frac{a_i}{a_1} \leqslant \frac{1}{1 - \dfrac{1 - \lambda_1}{n - 1}(i - 0,9)}$$

où i est un nombre entier compris entre 2 et n — 1, de manière que les fréquences de base de chacun des n cycles de dessin principaux soient régulièrement réparties sur la bande des fréquences entre les fréquences émises qui correspondent au plus petit cycle de dessin principal et au plus grand cycle de dessin principal.

Le procédé conforme à l'invention comprend les étapes suivantes :

On fixe la longueur $a_1$ ou pas du plus petit cycle principal de dessin $A_1$ qu'on peut utiliser, compte tenu du dessin élémentaire retenu pour les éléments porteurs de charge constituant la bande de roulement, en prenant en considération le fait qu'il n'est pas possible de descendre en dessous de certaines limites connues de l'homme de l'art ;

on fixe la longueur $a_n$ du plus grand cycle principal de dessin $A_n$ qu'on peut utiliser compte tenu du dessin élémentaire retenu pour les éléments porteurs de charge ;

on en déduit le rapport de pas maximal $\lambda_1 = a_1/a_n$ ; ce rapport de pas est généralement compris entre 0,5 et 1, et même 0,5 et 0,8. Selon l'invention, on utilise de préférence un rapport de pas $\lambda_1$ compris entre 0,60 et 0,75 ;

on fixe le nombre n de cycles de dessin principaux de pas différents en fonction du rapport de pas $\lambda_1$ déterminé auparavant. Selon une forme d'exécution préférentielle de l'invention, on utilise

n = 4 cycles de dessin lorsque $0,70 < \lambda_1 \leqslant 0,75$
n = 5 cycles de dessin lorsque $0,65 < \lambda_1 < 0,70$
n = 6 cycles de dessin lorsque $0,60 < \lambda_1 < 0,65$ ;

on fixe le pas de chacun des cycles de dessin principaux de rang i autres que ceux de pas maximum et minimum déjà fixés de telle manière que :

$$\frac{1}{1 - \dfrac{1 - \lambda_1}{n - 1}(i - 1,1)} \leqslant \frac{a_i}{a_1} \leqslant \frac{1}{1 - \dfrac{1 - \lambda_1}{n - 1}(i - 0,9)}$$

et de préférence

$$a_i = \frac{a_1}{1 - \dfrac{i - 1}{n - 1}(1 - \lambda_1)}\ .$$

le nombre n des cycles de dessin principaux devant tous avoir un pas différent et leurs pas respectifs étant déterminés, on fixe le nombre total de cycles de dessin principaux $N_i$ de chacun des cycles de dessin principaux de rang i de telle manière qu'il réponde aux équations :

(C)  $N_1 \cdot (\lambda_1)^\beta = N_2 \cdot (\lambda_2)^\beta = N_3 \cdot (\lambda_3)^\beta = \cdots = N_n$    et

(D)  $N_1 \cdot a_1 + N_2 \cdot a_2 + N_3 \cdot a_3 + \cdots + N_n \cdot a_n = 2\,\pi R \pm \varepsilon$

dans lesquelles N, $\lambda$, R et $\varepsilon$ ont les significations indiquées précédemment,

$\beta$ est un exposant qui est fonction de la manière dont varie le signal acoustique d'un cycle de dessin principal à un autre lorsque l'on passe du plus petit cycle au plus grand et qui est compris entre 1,5 et 3 et .

$a_i$ représente les longueurs respectives ou pas des cycles de dessin principaux de rang i considéré, $a_n$ la longueur du cycle de dessin principal de pas maximum.

De ces n équations on déduit :

$$N_n = \frac{2\pi R \pm \varepsilon}{a_n \displaystyle\sum_{i=1}^{i=n} \frac{1}{(\lambda_i)^{\beta-1}}} \qquad \text{et} \qquad \frac{N_i}{N_n} = \frac{1}{(\lambda_i)^{\beta}}$$

On obtient des nombres fractionnaires et il convient alors de prendre la solution entière la plus proche de ces nombres fractionnaires compte tenu de ce que le pneu est circonférentiel, et qu'il faut un nombre entier de cycles de dessin répétitifs ; l'homme de l'art peut aussi utiliser le procédé décrit en ajoutant une minorité de cycles de dessin de bouclage pour effectuer le bouclage sur la circonférence de la bande de roulement de l'enveloppe de pneumatique par un nombre entier de cycles de dessin.

On utilise ensuite un ordinateur ayant un programme adapté pour sélectionner la distribution de la totalité des cycles de dessin principaux ou de la totalité des cycles de dessin principaux et de bouclage sur la circonférence de la bande de roulement de l'enveloppe de pneumatique qui donnera le meilleur étalement du signal sur une large bande de fréquences d'énergie plus faible.

Il est bien entendu que l'invention s'applique aussi aux cas où le cycle de dessin principal s'étend sur toute la largeur de la bande de roulement ou sur une partie seulement de la largeur de celle-ci, notamment la moitié. L'invention s'applique également à des bandes de roulement d'enveloppes de pneumatiques dont les éléments porteurs de charge possèdent des formes très complexes pouvant être différentes aux bords et au centre de la bande de roulement et/ou dont les cycles de dessin sont plus ou moins décalés les uns par rapport aux autres dans le sens circonférentiel.

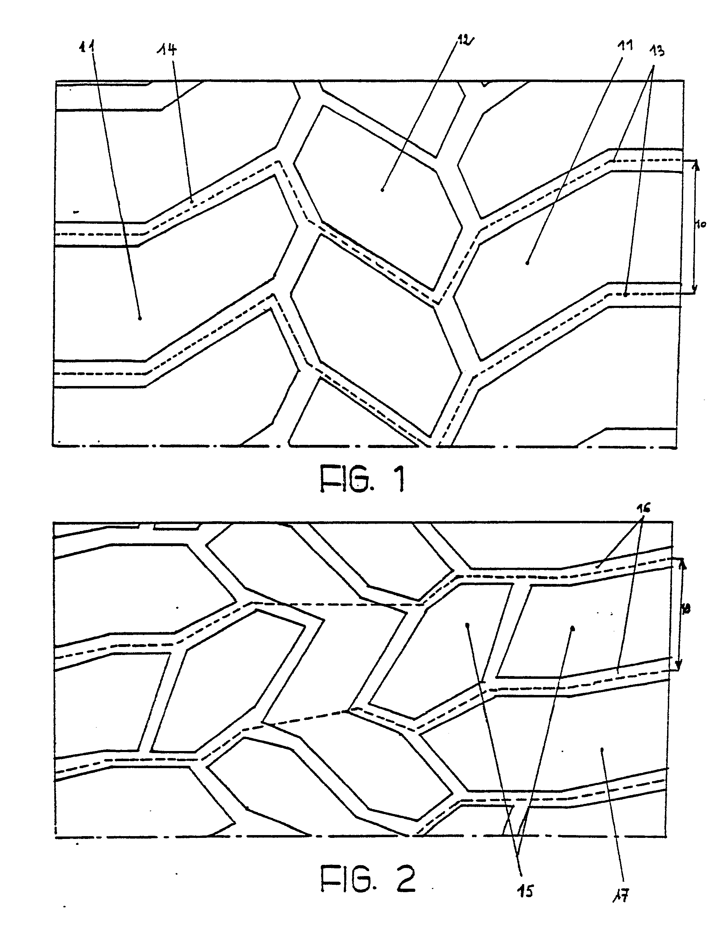

L'invention est illustrée à l'aide des exemples 1 à 3 et des figures 1 à 5. La figure 1 représente une portion de bande de roulement d'une enveloppe de pneumatique conforme à l'invention qui possède une succession de cycles de dessin principaux 10, partiellement décalés d'un bord à l'autre de la bande de roulement, comportant un élément porteur de charge 11 ou deux éléments porteurs de charge 11 et 12 qui s'étendent entre les lignes médianes 13 des rainures d'orientation générale transversale adjacentes 14 séparant deux éléments porteurs de charge. La figure 2 représente une portion d'une autre bande de roulement d'une enveloppe de pneumatique conforme à l'invention qui possède une succession de cycles de dessin principaux 10 comportant des éléments porteurs de charge 15 ou 17 séparés par des rainures d'orientation générale transversale 16. Les cycles de dessin peuvent être légèrement différents comme sur la figure 2, ils seront considérés comme identiques pour la détermination des $N_i$ s'ils ont même largeur.

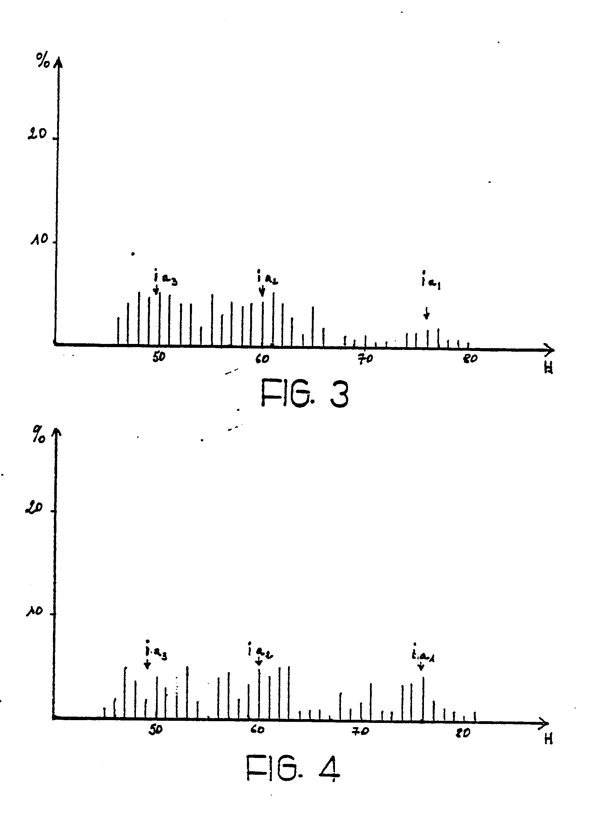

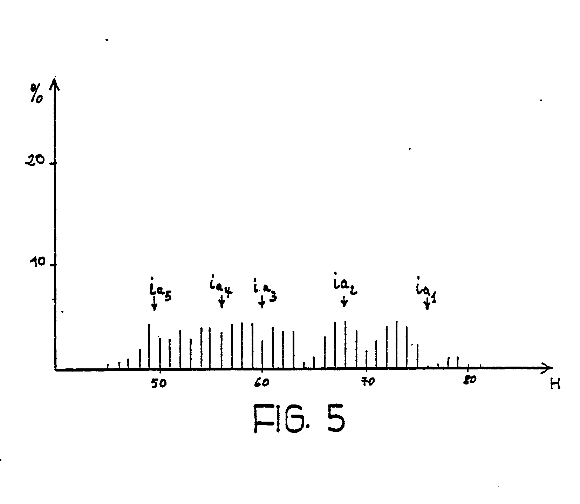

La figure 3 représente un diagramme de fréquences correspondant à une enveloppe de pneumatique ayant une variation de pas conforme à l'art antérieur, tandis que les figures 4 et 5 correspondent à des enveloppes de pneumatiques réalisées conformément à l'invention. Dans les figures 3, 4 et 5, on représente en abscisse l'harmonique par tour de roue et en ordonnée l'amplitude relative en %. Dans tous les exemples, on utilise une enveloppe de pneumatique à carcasse radiale de dimension 145 SR 13 ayant un développement de 177,24 cm et dont la forme des éléments porteurs de charge est identique.

## Exemple 1

Cet exemple illustre le cas d'une enveloppe de pneumatique à carcasse radiale dont les éléments porteurs de charge présents sur la bande de roulement circonférentielle de l'enveloppe sont répartis selon trois cycles de dessin principaux $A_1$, $A_2$, $A_3$ de pas différents, tels que le pas $a_2$ du cycle $A_2$ est égal à $a_2 = a_1 + a_3/2$ où $a_1$ et $a_3$ représentent les pas respectifs du plus petit cycle de dessin $A_1$ et du plus grand cycle de dessin $A_3$. En outre, le nombre total des cycles de dessin principaux de rang 1, 2 et 3 est égal à $N_{A1} = N_{A2} = N_{A3} = 20$ et le rapport de pas $\lambda$ est égal à 0,65. La succession des cycles de dessin principaux est la suivante : $A_1A_2A_3A_1A_1A_1A_1A_1A_1A_1A_1A_1A_1A_1A_3A_2A_1A_2A_1A_1A_1A_3A_2A_2A_2A_2A_2A_3A_2$ $A_2A_2A_2A_1A_2A_2A_2A_2A_3A_3A_3A_3A_1A_2A_3A_3A_3A_3A_3A_3A_3A_3A_3A_3A_2A_1A_3$. Les pas des trois cycles de dessin principaux sont respectivement : 23,27 mm, 29,54 mm, 35,81 mm.

La figure 3 montre que l'énergie est assez bien répartie entre les raies caractéristiques $i_{a3}$ et $i_{a2}$ mais qu'il y a peu d'énergie autour de la raie $i_{a1}$.

On peut schématiser les qualités d'étalement d'un spectre en calculant, pour les raies comprises entre les raies caractéristiques extrêmes, qui correspondent aux cycles de dessin principaux de rang 1 et n, le rapport $\varepsilon/\bar{m}$ dans lequel $\bar{m}$ et $\varepsilon$ sont respectivement la moyenne de l'énergie et l'écart type.

On constate d'après la figure 3 que $\varepsilon/\bar{m} = 0{,}69$ et que l'amplitude de la raie caractéristique maximum atteint 5,3 % de l'énergie totale du spectre.

## Exemple 2

Cet exemple illustre le cas d'une enveloppe de pneumatique à carcasse radiale dont les éléments porteurs de charge présents sur la bande de roulement circonférentielle sont répartis, conformément à l'invention, selon trois cycles de dessin principaux $A_1$, $A_2$, $A_3$ de pas différents tels que $a_1 < a_2 < a_3$ et que le pas du cycle $A_2$ soit égal à $a_2 = a_1 + a_3/2$, le rapport de pas $\lambda$ étant égal à 0,65 et le nombre total de chaque cycle de dessin de rang 1, 2 et 3 répondant à l'équation : $N_{A1} \cdot \lambda^2_{A1} = N_{A2} \cdot \lambda^2_{A2} = N_c$, c'est-à-dire que $N_{A1} = 32$, $N_{A2} = 19$ et $N_{A3} = 13$. La succession des cycles de dessin principaux est la suivante : $A_1A_1A_1A_1A_1A_1A_1A_1A_1A_1A_1A_1A_1A_1A_1A_1A_1A_1A_1A_2A_1A_1A_2A_1A_1A_1A_1A_3A_1A_1A_1A_2\ A_2A_2A_2A_2A_2A_1A_2A_2A_2A_2A_1A_3\ A_2A_2A_2A_2$

$A_2A_3A_3A_2A_1A_3A_3A_3A_3A_3A_3A_3A_3$. Les pas des trois cycles de dessin sont identiques à ceux de . l'exemple 1.

La figure 4 montre que, selon cette forme d'exécution conforme à l'invention, on a un meilleur étalement de l'énergie, c'est-à-dire un renforcement de l'énergie autour de la raie $i_{a1}$. Cependant, on perçoit encore un manque d'énergie entre les raies $i_{a2}$ et $i_{a1}$. On constate que $\varepsilon/\bar{m} = 0,60$ et que l'amplitude de la raie caractéristique maximum atteint 5,2 % de l'énergie totale du spectre.

Exemple 3

Cet exemple illustre le cas d'une enveloppe de pneumatique à carcasse radiale dont les éléments porteurs de charge présents sur la bande de roulement sont répartis, conformément à l'invention, selon une variante préférentielle où l'on utilise cinq cycles de dessin principaux $A_1$, $A_2$, $A_3$, $A_4$, $A_5$ de pas différents tels que le rapport de pas $\lambda$ soit égal à 0,65 et le nombre total de chaque cycle de dessin principal réponde à l'équation : $\lambda^2_{A1} \cdot N_{A1} = \lambda^2_{A2} \cdot N_{A2} = \lambda^2_{A3} \cdot N_{A3} = \lambda^2_{A4} \cdot N_{A4} = N_{A5}$, c'est-à-dire que $N_{A1} = 20$, $N_{A2} = 16$, $N_{A3} = 12$, $N_{A4} = 9$, $N_{A5} = 7$.

La succession des cycles de dessin principaux est la suivante : $A_1A_1A_1A_1A_1A_1A_1A_3A_1A_1$ $A_2A_2A_1A_1A_1A_1A_1A_1A_1A_2A_2A_2A_2A_2A_2A_2A_1A_2A_2A_2A_2A_2A_3A_3A_3A_3A_3A_1A_3A_3$ $A_3A_3A_3A_3A_4A_4A_4A_4A_4A_4A_4A_4$ $A_5A_5A_5A_5A_5$ $A_5A_5$.

Les pas des cinq cycles de dessin principaux sont respectivement : 23,27 mm, 26,145 mm, 29,83 mm, 31,55 mm, 35,81 mm.

La figure 5 montre que, selon cette forme d'exécution préférentielle, on a un meilleur étalement d'énergie entre les raies caractéristiques $i_{a5}$ et $i_{a1}$. On constate que $\varepsilon/\bar{m} = 0,46$ et que l'amplitude de la raie caractéristique maximum est de 4,8 % de l'énergie totale du spectre. Il ressort donc clairement que, par rapport à l'art antérieur, le procédé conforme à l'invention permet de passer de $\varepsilon/\bar{m} = 0,69$ à $\varepsilon/\bar{m} = 0,46$, c'est-à-dire d'obtenir un gain appréciable dans l'étalement de l'énergie acoustique produite par l'enveloppe de pneumatique.

**Revendications**

1. Enveloppe de pneumatique dont la bande de roulement est constituée par des éléments de support de charge répartis sur la circonférence de l'enveloppe de pneumatique selon une pluralité de n cycles de dessin répétitifs de pas variables, le nombre de chacun des cycles de dessin présents sur la bande de roulement satisfaisant à une première relation (C) :

$$\sum_{i=1}^{i=n} N_i\, a_i = 2\,\pi R \, ,$$

n représentant un nombre entier égal ou supérieur à 3, et de préférence compris entre 4 et 7, indiquant le nombre de cycles de dessin principaux de pas différents constituant la bande de roulement de l'enveloppe de pneumatique et désigne le cycle de dessin principal ayant le pas maximum,

i représentant l'un quelconque, le $i^{ème}$ des cycles de dessin principal de rang i autre que celui de pas maximum,

R représentant le rayon de l'enveloppe de pneumatique mesuré à la périphérie de la bande de roulement,

$a_i$ représentant la longueur du cycle de dessin principal de rang i considéré des cycles de dessin principaux de pas différents, et

$N_1$ représentant pour chacun des cycles de dessin principaux de rang i ayant un pas inférieur au pas du cycle de dessin principal de pas maximum le nombre total de cycles de dessin principaux de rang i, caractérisée en ce que le nombre de chacun des cycles de dessin principaux de pas différents satisfait à l'ensemble des n — 1 deuxièmes relations générales (B) :

$$\frac{1}{(\lambda_i)^{1.5}} \leqslant \frac{N_i}{N_n} \leqslant \frac{1}{(\lambda_i)^3}$$

$\lambda_i$ représentant le rapport de pas de la longueur de chacun des cycles de dessin principaux de rang i considéré sur la longueur du cycle de dessin principal de pas maximum,

$N_n$ représentant le nombre total de cycles de dessin principaux de pas maximum, et en ce que — dans le cas d'un arrangement additionnel des cycles de dessin de bouclage — ladite première relation (C) s'énonce :

$$\sum_{i=1}^{i=n} N_i\, a_i + \sum_{j=1}^{j=m} N_j^*\, a_j^* = 2\,\pi R \pm \varepsilon$$

étant entendu que ε peut être égal à 0,

m représentant le nombre de cycles de dessin de bouclage de pas différents présents sur la bande de roulement de l'enveloppe de pneumatique qui peut être soit 0, soit un nombre entier et désigne le cycle de dessin de bouclage ayant le pas maximum,

j représentant l'un quelconque, le j$^{ème}$ des cycles de dessin de bouclage de rang j,

ε représentant la tolérance de réalisation des cycles de dessin sur la circonférence de l'enveloppe de pneumatique,

a*$_j$ représentant la longueur du cycle de dessin de bouclage de rang j considéré des cycles de dessin de bouclage de pas différents,

N*$_j$ représentant le nombre total des cycles de dessin de bouclage de chacun des cycles de rang j considéré.

2. Enveloppe de pneumatique selon la revendication 1, caractérisée en ce que n est égal à 4, 5 ou 6.

3. Enveloppe de pneumatique selon la revendication 1, caractérisée en ce que $\lambda_i$ est compris entre 0,5 et 0,8.

4. Enveloppe de pneumatique selon la revendication 1, caractérisée en ce que le nombre de chacun des cycles de dessin principaux de pas différents satisfait à n — 2 relations desdites n —1 deuxièmes relations générales (B), où n représente un nombre entier égal ou supérieur à 5.

5. Enveloppe de pneumatique selon l'une des revendications 1 à 4, caractérisée en ce que

n est égal à 4 lorsque $0,70 < \lambda_1 \leq 0,75$

n est égal à 5 lorsque $0,65 < \lambda_1 < 0,70$

n est égal à 6 lorsque $0,60 < \lambda_1 < 0,65$

6. Enveloppe de pneumatique selon l'une des revendications 1 à 5, caractérisée en ce que le pas de chacun des cycles de dessin principaux de rang i est tel que l'on ait :

$$\cfrac{1}{1 - \cfrac{1 - \lambda_1}{n - 1}(i - 1,1)} \leq \frac{a_i}{a_1} \leq \cfrac{1}{1 - \cfrac{1 - \lambda_1}{n - 1}(i - 0,9)}$$

7. Enveloppe de pneumatique selon l'une des revendications 1 à 6 caractérisée en ce que le pas de chacun des cycles de dessin principaux de rang i est tel que :

$$a_i = \cfrac{a_1}{1 - \cfrac{i - 1}{n - 1}(1 - \lambda_1)}$$

8. Enveloppe de pneumatique selon l'une des revendications 1 à 7, caractérisée en ce qu'elle a une carcasse radiale.

9. Procédé de réalisation du dessin d'une bande de roulement d'enveloppe de pneumatique selon l'une des revendications 1 à 8, caractérisé en ce que l'on fixe la longueur $a_1$ du plus petit cycle de dessin principal de la bande de roulement $i_1$ puis la longueur $a_n$ du plus grand cycle de dessin principal n, on détermine le rapport de pas maximum $\lambda_1 = a_1/a_n$, ensuite on fixe le nombre n de cycles de dessin principaux répétitifs de pas différents en fonction du rapport de pas $\lambda_1$ déterminé auparavant, puis on fixe le pas de chacun des cycles de dessin principaux répétitifs de rang i autres que ceux de pas respectivement maximum et minimum, on fixe ensuite le nombre total de cycles de dessin principaux répétitifs $N_i$ de chacun des cycles de dessin principal de rang i compris entre i = 1 et i = n en appliquant les équations :

$$N_1(\lambda_1)^\beta = N_2(\lambda_2)^\beta = \cdots = N_n \quad \text{et}$$

$$N_1 a_1 + N_2 a_2 + \cdots + N_n a_n = 2\pi R \pm \varepsilon$$

dans lesquelles les symboles N, $\lambda$, ε, a ont la même signification que dans la revendication 1 pour les cycles de dessin principaux de rang i = 1, 2, ..., n et β est un exposant qui est fonction de la manière dont varie le signal acoustique d'un cycle de dessin principal à un autre lorsque l'on passe du plus petit cycle principal au plus grand et qui est compris entre 1,5 et 3, et en prenant les nombres entiers les plus proches des nombres fractionnaires obtenus, on utilise ensuite un ordinateur programmé pour sélectionner la distribution de la totalité des cycles de dessin principaux répétitifs sur la circonférence de la bande de roulement qui donnera l'étalement optimal du signal sur une large bande de fréquences d'énergie plus faible.

**Claims**

1. A tyre whose tread is formed of load-bearing elements distributed over the circumference of the tyre in accordance with a plurality of repetitive design cycles of variable pitch, the number of each of the design cycles present on the tread satisfying a first relationship (c) :

$$\sum_{i=1}^{i=n} N_i \, a_i = 2 \, \pi R \,,$$

n representing the number of principal design cycles of different pitch present on the tread of the tyre, which is a whole number equal or greater to 3, preferably from 4 to 7, and it also designates the principal design cycle having the maximum pitch ;

i representing one, the $i^{th}$, of the principal design cycles of rank i other than that of maximum pitch,

R representing the radius of the tyre measured at the periphery of the tread which comes into contact with the surface of the ground ;

$a_i$ representing the length of the principal design cycle of rank i in question of the principal design cycles of different pitch ;

$N_i$ representing for each of the principal design cycle of rank i having a pitch less than the pitch of the principal design cycle of maximum pitch, the total number of principal design cycles of rank i, characterized by the fact that the number of each of the principal design cycles of different pitch satisfies all of the n — 1 second general relationships (B) :

$$\frac{1}{(\lambda_i)^{1.5}} \leqslant \frac{N_i}{N_n} \leqslant \frac{1}{(\lambda_i)^3} \,;$$

$\lambda_i$ representing the pitch ratio of the length of each of the principal design cycles of rank i in question to the length of the principal design cycle of maximum pitch ;

$N_n$ representing the total number of principal design cycles of maximum pitch and, in the case of presence of additional looping design cycles, the first relation (C) is :

$$\sum_{i=1}^{i=n} N_i \, a_i + \sum_{j=1}^{j=m} N_j^* \, a_j^* = 2 \, \pi R \pm \varepsilon$$

it being understood that $\varepsilon$ may be equal to zero ;

m representing the number of looping design cycles of different pitch present on the tread of the tyre, which may be either zero or a whole number, and it also designates the looping design cycles having the maximum pitch ;

j representing any one, the $j^{th}$, of the looping design cycle of rank j ;

$\varepsilon$ representing the tolerance in the production of the design cycles on the circumference of the tyre ;

$a_j^*$ representing the length of the looping design cycle or rank j in question of the looping design cycles of different pitch ;

$N_j^*$ representing the total number of looping design cycles of each of the cycles of rank j in question.

2. A tyre according to claim 1, characterized by the fact that n is equal to 4, 5 or 6.

3. A tyre according to claim 1, characterized by the fact that $\lambda_i$ is from 0,5 to 0,8.

4. A tyre according to claim 1, characterized by the fact that the number of each of the principal design cycles of different pitch satisfies the n — 2 relationships of the n — 1 general relationships (B) where n represents a whole number equal or greater to 5.

5. A tyre according to any one of claims 1 to 4, characterized by the fact that :

n = 4 when $0,70 < \lambda_1 \leqslant 0,75$

n = 5 when $0,65 < \lambda_1 \leqslant 0,70$

n = 6 when $0,60 < \lambda_1 \leqslant 0,65$

6. A tyre according to any one of claims 1 to 5, characterized by the fact that the pitch of each of the principal design cycles of rank i is such that :

$$\frac{1}{1 - \dfrac{1 - \lambda_1}{n - 1} (i - 1,1)} \leqslant \frac{a_j}{a_n} \leqslant \frac{1}{1 - \dfrac{1 - \lambda_1}{n - 1} (i - 0,9)}$$

7. A tyre according to any one of claims 1 to 6, characterized by the fact that the pitch of each of the principal design cycles of rank i is such that :

$$a_i = \frac{a_1}{1 - \dfrac{i - 1}{n - 1} (1 - \lambda_1)}$$

8. A tyre according to any one of claims 1 to 7, characterized by the fact that is has a radial carcass.

9. A method of producing the design of a tyre tread according to any one of claims 1 to 8, characterized by fixing the length $a_1$ of the smallest principal design cycle $i_1$ of the tread, then fixing the length $a_n$ of the largest principal design cycle n, determining the maximum pitch ratio $\lambda_1 = a_1/a_n$, then fixing the number n of repetitive principal design cycles of different pitch as a function of the pitch ratio $\lambda_1$ previously determined, then fixing the pitch of each of the repetitive principal design cycles of rank i other than those of the maximum and minimum pitches, respectively ; then fixing the total number of repetitive principal design cycles $N_i$ of each of the principal design cycles of rank i between i = 1 and i = n by applying the equations :

$$N_1 (\lambda_1)^{\beta} = N_2 (\lambda_2)^{\beta} = \cdots = N_n \quad \text{and}$$

$$N_1 a_1 + N_2 a_2 + \cdots + N_n a_n = 2 \pi R \pm \varepsilon$$

in which the symbols N, $\lambda$, $\varepsilon$ and a have the same meaning as in claim 1 for principal design cycles of rank i = 1, 2, ... n and $\beta$ is an exponent which is function of the manner in which the accoustic signal varies from one principal design cycle to another when one passes from the smallest principal design cycle to the largest principal design cycle and which is between 1,5 and 3 taking the whole numbers closest to the fractional numbers obtained, then using a computer programmed to select the distribution of the total number of repetitive principal design cycles on the circumference of the tread which will give the optimal spread on the accoustic signal over a wide band frequency of lowest energy.

### Patentansprüche

1. Luftreifen, dessen Lauffläche aus Tragelementen besteht, die über den Umfang des Luftreifens zyklisch, in einem sich wiederholenden Muster mit variabler Schrittlänge verteilt sind, wobei die Anzahl der Zyklen des Musters auf der Lauffläche eine erste Bedingung (C) erfüllt :

$$\sum_{i=1}^{i=n} N_i a_i = 2 \pi R \,,$$

wobei

n eine ganze Zahl gleich oder grösser 3, vorzugsweise zwischen 4 und 7 ist, die die Anzahl der Zyklen der Hauptmuster mit unterschiedlicher Schrittlänge die die Lauffläche des Luftreifens bilden und den Zyklus des Hauptmusters mit der grössten Schrittlänge angibt,

i irgendeinen, den i-ten Zyklus des Hauptmusters an i-ter Stelle ausser das mit der grössten Schrittlänge bedeutet

R den Radius des Luftreifens, gemessen am Umfang der Lauffläche bedeutet,

$a_i$ die Länge des Hauptmusterzyklus an i-ter Stelle bei Betrachtung von Hauptmusterzyklen verschiedener Längen bedeutet und

$N_i$ für jeden der Zyklen des Hauptmusters an i-ter Stelle mit einer kleineren Schrittlänge als der grössten Schrittlänge des Hauptmusters die Anzahl der Zyklen des Hauptmusters an i-ter Stelle bedeutet, dadurch gekennzeichnet, dass die Anzahl jedes der Zyklen des Hauptmusters mit verschiedener Schrittlänge im gesamten die n — 1 zweiten Bedingungen (B) erfüllen :

$$\frac{1}{(\lambda_i)^{1.5}} \leqslant \frac{N_i}{N_n} \leqslant \frac{1}{(\lambda_i)^{3}} ;$$

wobei

$\lambda_i$ das Verhältnis zwischen der Schrittlänge jedes Zyklus des Hauptmusters an i-ter Stelle und der grössten Schrittlänge des Hauptmusters ist,

$N_n$ die Gesamtzahl der Zyklen des Hauptmusters mit der grössten Schrittlänge ist ;

und dass — im Falle des zusätzlichen Vorhandenseins von Zyklen im Riegelmuster — die erste Bedingung (C) sich folgendermassen erweitert :

$$\sum_{i=1}^{i=n} N_i a_i + \sum_{j=1}^{j=m} N_j^* a_j^* = 2 \pi R \pm \varepsilon$$

wobei $\varepsilon$ auch 0 sein kann und wobei

m die Anzahl der Zyklen mit Riegelmuster mit unterschiedlicher Schrittlänge auf der Lauffläche des Luftreifens ist und die 0 oder eine ganze Zahl sein kann und auch die Anzahl der Zyklen mit Riegelmuster mit maximaler Schrittlänge angibt,

j irgendeinen, den j-ten Zyklus des Riegelmusters an j-ter Stelle bedeutet,

$\varepsilon$ für die Toleranz der Zyklen wie sie am Umfang des Luftreifens ausgeführt sind steht,

$a^*_j$ die Länge des Zyklus des Riegelmusters an j-ter Stelle bei Betrachtung von Riegelmusterzyklen verschiedener Schrittlänge bedeutet und

$N^*_j$ für die Gesamtzahl der Riegelmusterzyklen jeder betrachteten Stelle j steht.

2. Luftreifen nach Anspruch 1, dadurch gekennzeichnet, dass n 4, 5 oder 6 ist.

3. Luftreifen nach Anspruch 1, dadurch gekennzeichnet, dass $\lambda_i$ zwischen 0,5 und 0,8 liegt.

4. Luftreifen nach Anspruch 1, dadurch gekennzeichnet, dass die Anzahl jedes der Zyklen des Hauptmusters mit unterschiedlicher Schrittlänge die n — 2 Bedingungen der n — 1 zweiten allgemeiner Bedingungen (B) erfüllt, wobei n eine ganze Zahl gleich oder grösser 5 ist.

5. Luftreifen nach einem der Ansprüche 1 bis 4, dadurch gekennzeichnet, dass

n gleich 4 ist wenn $0,70 < \lambda_1 \leqslant 0,75$ ;

n gleich 5 ist wenn $0,65 < \lambda_1 \leqslant 0,70$ ;

n gleich 6 ist wenn $0,60 < \lambda_1 \leqslant 0,65$.

6. Luftreifen nach einem der Ansprüche 1 bis 5, dadurch gekennzeichnet, dass die Schrittlänge jedes Zyklus des Hauptmusters an i-ter Stelle folgende Bedingung erfüllt :

$$\frac{1}{1 - \dfrac{1 - \lambda_1}{n - 1}(i - 1,1)} \leqslant \frac{a_i}{a_1} \leqslant \frac{1}{1 - \dfrac{1 - \lambda_1}{n - 1}(i - 0,9)}$$

7. Luftreifen nach einem der Ansprüche 1 bis 6, dadurch gekennzeichnet, dass die Schrittlänge jedes Zyklus des Hauptmusters an i-ter Stelle folgende Bedingung erfüllt :

$$a_i = \frac{a_1}{1 - \dfrac{i - 1}{n - 1}(1 - \lambda_1)}$$

8. Luftreifen nach einem der Ansprüche 1 bis 7, dadurch gekennzeichnet, dass er eine Radialkarkasse aufweist.

9. Verfahren zur Herstellung eines Luftreifens nach einem der Ansprüche 1 bis 8, dadurch gekennzeichnet, daß man die Länge $a_1$ des kürzesten Zyklus des Haptmusters der Lauffläche $i_1$ wählt, dann die Länge $a_n$ des längsten Zyklus des Hauptmusters n, dann das Verhältnis des Maximalschrittes $\lambda_1 = a_1/a_n$, anschliessend wählt man die Anzahl n der sich wiederholenden Hauptmusterzyklen mit verschiedenen Schrittlängen in Abhängigkeit vom bereits bestimmten Verhältnis $\lambda_1$, dann wählt man für jeden der Zyklen des sich wiederholenden Hauptmusters die i-ten Stellen ausser für den maximalen und minimalen Schritt, fixiert sodann die Gesamtzahl der sich wiederholenden Hauptmusterzyklen $N_i$ jedes der Hauptmusterzyklen der iten Stelle zwischen i = 1 und i = n indem man die Gleichungen :

$$N_1(\lambda_1)^\beta = N_2(\lambda_2)^\beta = \cdots = N_n \quad \text{und}$$

$$N_1 a_1 + N_2 a_2 + \cdots + N_n a_n = 2\pi R \pm \varepsilon$$

in denen die Symbole die im Anspruch 1 angegebene Bedeutung haben für die Hauptmusterzyklen der Stellen i = 1, 2, ...., n löst, wobei 8 ein Exponent in Abhängigkeit von der Art ist, wie das abgegebene akustische Signal von einem Hauptmusterzyklus zum anderen variiert, wenn man vom kleinsten Hauptzyklus zum größten fortschreitet und der zwischen 1,5 und 3 liegt ; wobei man die nächstliegenden ganzen Zahlen an Stelle der erhaltenen Dezimalzahlen nimmt und wobei man eine programmierbare Datenverarbeitungsanlage verwendet um die Verteilung der Gesamtheit der Zyklen des sich wiederholenden Hauptmusters auf dem Umfang der Lauffläche zu ermitteln, um das Optimum des Signals auf einen breiten Frequenzband mit niedriger Energie zu erhalten.

FIG. 1

FIG. 2

FIG. 3

FIG. 4

FIG. 5